# EUROPÄISCHE PATENTSCHRIFT

(11) **EP 0 634 128 B1**
(45) Veröffentlichungstag und Bekanntmachung des Hinweises auf die Patenterteilung: **23.10.1996**
(21) Anmeldenummer: 93111487.0
(22) Anmeldetag: 16.07.1993
(51) Int. Cl.: A47J 31/06

(54) **Einführhilfe für den Siebhalter einer Espressomaschine**
Insertion aids for filter holder of espresso coffee machine
Moyen d'insertion d'un porte-filtre dans une cafetière à espresso

(43) Veröffentlichungstag der Anmeldung: 18.01.1995
(73) Patentinhaber: Eugster/Frismag AG, CH-8590 Romanshorn (CH)
(72) Erfinder: Fischer, Daniel, CH-8590 Romanshorn (CH)
(74) Vertreter: Schubert, Siegmar, Dipl.-Ing.

(56) Entgegenhaltungen:
- CH-A- 162 960
- DE-C- 457 865
- FR-A- 706 126

## Beschreibung

Die Erfindung betrifft eine Espressomaschine mit einem an ihrer Unterseite befindlichen Brühkopf, in den von unten her ein Siebhalter mit einem Handgriff und mit einem Sieb eingesetzt werden kann, wobei der Siebhalter am Brühkopf durch eine Schwenkbewegung des Siebhalters um die Achse des Brühkopfes verriegelt bzw. wieder entriegelt werden kann (siehe DE-C-457 865). Das Verriegeln und Entriegeln erfolgt üblicherweise über einen Bajonettverschluß, wobei am oberen Rand des Siebhalters mindestens zwei Nocken vorgesehen sind, die beim Ankoppeln des Siebhalters an den Brühkopf der Espressomaschine durch eine senkrecht nach oben geführte Bewegung in entsprechende Gegenschlitze an der Innenseite des Brühkopfes eingeführt und durch eine Drehung mit dem Brühkopf verriegelt werden. Die Gegenschlitze befinden sich am unteren Rand des Brühkopfes. Dabei erfolgt auf einer schraubenförmigen schiefen Ebene eine dichte Verbindung zwischen dem Brühkopf, dem Sieb und dem Siebhalter.

Da dieser Vorgang praktisch verdeckt vor sich geht, weil nämlich die Einführung der Nocken in die Schlitze nicht beobachtet werden kann, bedarf es einiger Übung, um den Siebhalter ohne Verkanten und ohne größeren Zeitverlust in die richtige Position bringen zu können.

Hier setzt die Erfindung ein, der die Aufgabe zugrundeliegt, eine Espressomaschine mit den eingangs genannten Merkmalen vorzuschlagen, bei der das Einführen des Siebhalters in den Brühkopf praktisch blind erfolgen kann, so daß also sehr schnell die richtige Position gefunden werden kann, in der der Siebhalter von unten in den Brühkopf einzuführen ist. Dies soll auf konstruktiv einfache Weise möglich sein.

Ausgehend von einer Espressomaschine mit den Merkmalen des Oberbegriffs von Patentanspruch 1 gelingt die Lösung der Erfindungsaufgabe dadurch, daß am Brühkopf drehbar ein Positionierring befestigt ist, der einen zu seiner Unterseite hin offenen Ausschnitt für den Handgriff des Siebhalters hat, und daß eine Anzeige für die Ausgangsposition des Positionierringes vorgesehen ist, in der der Siebhalter in den Brühkopf eingesetzt werden kann.

Will man den Siebhalter in den Brühkopf der Espressomaschine einführen, so muß lediglich dafür gesorgt werden - hierzu vergleiche auch weiter unten -, daß der Positonierring sich in der Ausgangsposition befindet, in der also der Siebhalter in den Brühkopf eingesetzt werden kann. Jetzt führt man den Siebhalter von unten in den Brühkopf in derjenigen Winkelstellung ein, in der der Handgriff des Siebhalters in den Ausschnitt des Positionierringes paßt und dies ist schon die richtige Einführposition für den Siebhalter. Man bewegt jetzt den Siebhalter nach oben - wobei der Positionierring mit nach oben bewegt wird oder auch an Ort und Stelle verbleibt - und findet dann ohne weiteres Probieren sofort die richtige Position zum Verriegeln des Bajonettverschlusses.

Für die erfindungsgemäß vorgesehene Anzeige für die Ausgangsposition des Positionierringes gibt es mehrere Möglichkeiten. Eine dieser Möglichkeiten ist dadurch gekennzeichnet, daß die Anzeige als Rastung ausgebildet ist, beispielsweise als eine federbelastete Kugel oder dgl., die an dem einen der beiden Teile vorgesehen ist, und die in der Ausgangsposition in eine entsprechende Vertiefung am anderen Teil einrastet. Dadurch wird beim Zurückdrehen des Positionierringes eine Anzeige geschaffen, die erkennen läßt, wenn und in welcher Winkellage die Ausgangsposition erreicht ist.

Eine andere und ebenfalls bevorzugte Ausgestaltung für die Anzeige ist dadurch gekennzeichnet, daß die Anzeige eine Rückstellfeder aufweist, die den Siebhalter gegen einen die Ausgangsposition markierenden Anschlag zu drehen sucht. Hierbei erfolgt die Rückstellung des Positionierringes in die Ausgangsposition unterstützt durch die Federkraft und der Anschlag markiert die erwähnte Ausgangsposition.

Eine andere und konstruktiv besonders einfache Ausgestaltung dieser Anzeige ist dadurch gekennzeichnet, daß die Anzeige als Markierung ausgebildet ist. Hier muß man also lediglich darauf achten, daß zwei Marken einander gegenüberstehen und dann ist die Ausgangsposition erreicht.

Für diese Markierung kann man den ja ohnedies vorhandenen Ausschnitt am Positinierring verwenden, dem dann in der Ausgangsposition des Positionierringes eine entsprechende Markierung am Brühkopf bzw. an der Espressomaschine selbst gegenüberliegt.

Ergänzend wird darauf hingewiesen, daß der Positionierring aus Platzgründen drehbar an der Außenseite des Brühkopfs befestigt ist. Er ist dort über geeignete Mittel unverlierbar gehalten, beispielsweise über einen Stift an einem der Teile, der in eine entsprechende Rille an dem anderen Teil eingreift, oder auch über eine Ringschulter am Positonierring, die einen entsprechenden Absatz am Brühkopf übergreift.

Die Erfindung wird im folgenden anhand eines Ausführungsbeispieles näher erläutert, aus dem sich weitere wichtige Merkmale ergeben. Es zeigt:
- Fig. 1: schematisch eine Seitenansicht der wichtigen Bauelemente einer erfindungsgemäßen Espressomaschine, wobei der Siebhalter in der Ausgangsposition zum Einführen in den Brühkopf kurz unterhalb des Brühkopfes dargestellt ist;
- Fig. 2: eine Ansicht in Richtung des Pfeiles A von Fig. 1;
- Fig. 3: einen Schnitt längs der Linie B-B von Fig. 1.

Zeichnerisch angedeutet ist der untere Teil einer Espressomaschine 10, an deren Unterseite ein Brühkopf 1 vorgesehen ist. Der Brühkopf hat an seiner Innenseite Gegenschlitze 8, die mit Nocken 7 oben an der Außenseite eines Siebhalters 3 nach Art eines Bajonettverschlusses zusammenarbeiten.

In den Siebhalter 3 ist ein Kaffeesieb 9 eingesetzt und am Siebhalter ist außerdem ein nach außen weisender Handgriff 5 befestigt.

Als Einführhilfe für den Siebhalter ist erfindungsgemäß ein Positionierring 2 vorgesehen, der unverlierbar außen auf den Brühkopf 1 aufgesetzt ist und der drehbar am Brühkopf gehalten ist. Der Positionierring hat einen zu seiner Unterseite hin offenen Ausschnitt 6.

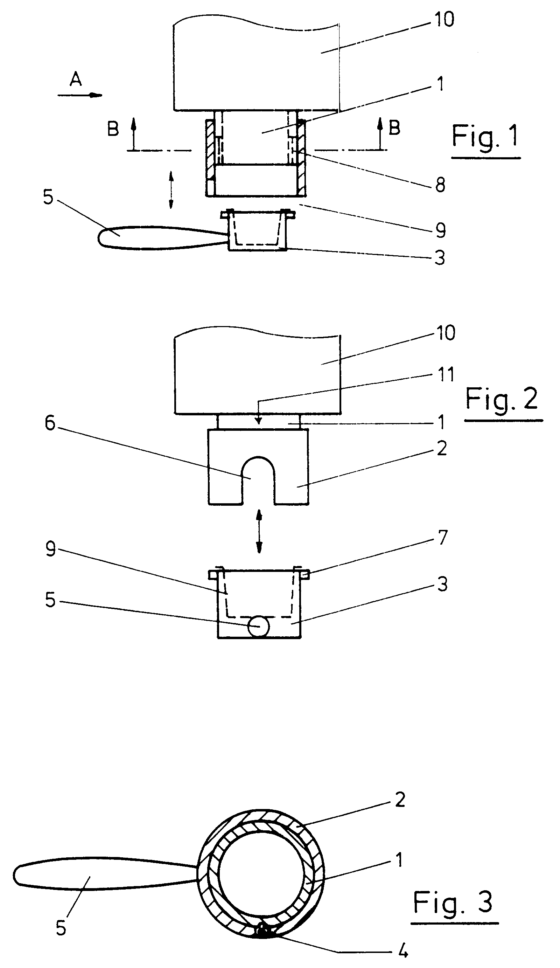

Die Fig. 1 und 2 zeigen, daß zum Einführen des Siebhalters 3 von unten in den Brühkopf der Siebhalter so angeordnet wird, daß er mit seinem Handgriff 5 von unten in den Ausschnitt 6 des Positionierringes 2 eingreift. Weil vorher durch geeignete Maßnahmen dafür gesorgt wurde, daß sich der Positionierring in der Ausgangsposition befindet, in der der Siebhalter also in den Brühkopf von unten eingesetzt werden kann, kann jetzt der Siebhalter (mitsamt dem Positonierring oder auch ohne ihn) nach oben bewegt werden, so daß dann ohne weiteres Probieren beim Verdrehen des Siebhalters die Nocken 7 in die Gegenschlitze 8 eingreifen und somit den Siebhalter am Brühkopf verriegeln.

Das Lösen des Siebhalters vom Brühkopf geschieht entsprechend in umgekehrter Reihenfolge der Bewegungen und dabei wird dann auch dafür gesorgt, daß der Positionierring wieder seine zeichnerisch dargestellte Ausgangsposition (Winkellage) einnimmt.

Um sicherzustellen, daß der Positionierring diese Ausgangsposition einnimmt, kann eine Rastung vorgesehen sein, die in Fig. 3 gezeigt ist. Sie besteht aus einer federbelasteten Kugel 4, die in dieser Ausgangsposition (Winkellage) in eine entsprechende Aufnahme am anderen Teil eingreift.

Es wurde schon darauf hingewiesen, daß statt dessen auch eine - zeichnerisch nicht dargestellte - Rückstellfeder vorgesehen sein kann, die dafür sorgt, daß der Positionierring seine Ausgangsposition wieder einnimmt.

Bei der einfachsten Ausführungsform liegt in der Ausgangsposition dem Ausschnitt 6 eine Markierung 11 am Brühkopf oder an der Maschine gegenüber, wodurch eine optische Anzeige für die Ausgangsposition geschaffen wird.

Es können auch mehrere dieser Anzeigen 4, 11 vorgesehen sein, beispielsweise die optische Anzeige 11 kombiniert mit der Rastung 4 oder auch der Rückstellfeder.

Beim Schließen des Bajonettverschlusses wird also der Ring 2 mitgedreht und beim Öffnen wird er wieder in die Ausgangsposition gedreht. Die Rückstellfeder bzw. die Rastung 4 bewirken, daß der Ring bei entnommenem Siebhalter immer in der Ausgangsstellung (Null-Position) verbleibt, in der also der Siebhalter wieder in den Brühkopf eingeführt werden kann.

## Patentansprüche

1. Espressomaschine (10) mit einem an ihrer Unterseite befindlichen Brühkopf (1), in den von unten her ein Siebhalter (3) mit einem Handgriff (5) und mit einem Sieb (9) eingesetzt werden kann, wobei der Siebhalter (3) am Brühkopf (1) durch eine Schwenkbewegung des Siebhalters (3) um die Achse des Brühkopfes (1) verriegelt bzw. wieder entriegelt werden kann,
**dadurch gekennzeichnet**,
daß am Brühkopf (1) drehbar ein Positionierring (2) befestigt ist, der einen zu seiner Unterseite hin offenen Ausschnitt (6) für den Handgriff (5) des Siebhalters (3) hat, und daß eine Anzeige (4) für die Ausgangsposition des Positionierringes (2) vorgesehen ist, in der der Siebhalter (3) in den Brühkopf (1) eingesetzt werden kann.

2. Espressomaschine nach Anspruch 1,
**dadurch gekennzeichnet**,
daß die Anzeige (4) als Rastung ausgebildet ist.

3. Espressomaschine nach Anspruch 1,
**dadurch gekennzeichnet**,
daß die Anzeige (4) eine Rückstellfeder aufweist, die den Siebhalter (3) gegen einen die Ausgangsposition markierenden Anschlag zu drehen sucht.

4. Espressomaschine nach Anspruch 1,
**dadurch gekennzeichnet**,
daß die Anzeige als Markierung (6,11) ausgebildet ist.

5. Espressomaschine nach Anspruch 4,
**dadurch gekennzeichnet**,
daß die am Brühkopf (1) oder an der Espressomaschine (10) angebrachte Markierung (11) in der Ausgangsposition dem Ausschnitt (6) gegenüberliegt.

## Claims

1. An espresso machine (10) having on its underside a group head (1) into which a filter holder (3) having a handle (5) and a filter (9) can be inserted from below, the filter holder (3) being lockable to and unlockable from the group head (1) by a pivoting movement of the filter holder (3) around the axis of the group head (1), characterized in that rotatably attached to the group head (1) is a positioning ring (2) which is formed for the handle (5) of the filter holder (3) with a cutout (6) open in the direction of the ring underside, an indicator (4) being provided for the starting position of the positioning ring (2), in which the filter holder (3) can be inserted into the group head (1).

2. An espresso machine according to claim 1, characterized in that the indicator (4) takes the form of a catch.

3. An espresso machine according to claim 1, characterized in that the indicator (4) has a return spring which tends to rotate the filter holder (3) towards a stop marking the starting position.

4. An espresso machine according to claim 1, characterized in that the indicator takes the form of a marking (6, 11).

5. An espresso machine according to claim 4, characterized in that in the starting position the marking (11) on the group head (1) or the espresso machine (10) is situated opposite the cutout (6).

## Revendications

1. Cafetière à expresso (10) comportant une tête d'ébouillantage (1) située sur sa face inférieure et dans laquelle on peut insérer, à partir du bas, un porte-filtre (3) pourvu d'une poignée (5) et d'un filtre (9), le porte-filtre (3) pouvant être verrouillé sur la tête d'ébouillantage (1) et en être à nouveau déverrouillé par un mouvement de pivotement du porte-filtre (3) autour de l'axe de la tête d'ébouillantage (1), caractérisée en ce que sur la tête d'ébouillantage (1) est fixée, de manière à pouvoir tourner, une bague de positionnement (2), qui possède une découpe (6), ouverte en direction de sa face inférieure, pour la poignée (5) du porte-filtre (3), et en ce qu'il est prévu un indicateur (4) de la position initiale de la bague de positionnement (2), dans laquelle le porte-filtre (3) peut être inséré dans la tête d'ébouillantage (1).

2. Cafetière à expresso selon la revendication 1, caractérisée en ce que l'indicateur (4) est réalisé sous la forme d'un cran d'encliquetage.

3. Cafetière à expresso selon la revendication 1, caractérisée en ce que l'indicateur (4) comporte un ressort de rappel, qui tend à faire pivoter le porte-filtre (3) en direction d'une butée qui marque la position initiale.

4. Cafetière à expresso selon la revendication 1, caractérisée en ce que l'indicateur est réalisé sous la forme d'un repère (6, 11).

5. Cafetière à expresso selon la revendication 4, caractérisée en ce que, dans la position initiale, le repère (11), qui est apposé sur la tête d'ébouillantage (1) ou sur la cafetière à expresso (10), est situé en vis-à-vis de la découpe (6).
